# FASCICULE DE BREVET EUROPEEN

(11) **EP 2 165 094 B1**
(45) Date de publication et mention de la délivrance du brevet: **06.06.2012**
(21) Numéro de dépôt: 08760970.7
(22) Date de dépôt: 12.06.2008
(51) Int. Cl.: F16H 59/68, F16H 59/70, F16H 61/12

(54) **Capteur de position d'une boîte de vitesses, boîte de vitesses comprenant un tel capteur et procédé de détection de la position du point mort d'une boîte de vitesses d'un véhicule automobile comprennant un tel capteur**
Getriebepositionssensor, Getriebe mit einem derartigen Sensor und Verfahren zum Erfassen der Leerlaufstellung eines Kraftfahrzeug-Getriebes mit einem solchen Sensor
Position detector for a gearbox, gearbox comprising such a detector and method for determining the idle speed position of a gearbox of an automobile comprising such a detector

(30) Priorité: 13.06.2007 FR 0704220
(43) Date de publication de la demande: 24.03.2010
(73) Titulaire: SC2N, 94000 Créteil (FR)
(72) Inventeur: CASTRO, Pascal, F-14120 Mondeville (FR); GUIBET, Vincent, F-14120 Mondeville (FR)
(74) Mandataire: Cardon, Nicolas
(86) Numéro de dépôt international: PCT/EP2008/057436
(87) Numéro de publication internationale: WO 2008/155289

(56) Documents cités:
- EP-A- 0 242 086
- WO-A-2005/064281
- DE-A1- 10 253 035
- FR-A- 2 818 725
- US-A- 4 445 393

## Description

La présente invention concerne un capteur de position d'une boite de vitesses d'un véhicule automobile, une boîte de vitesses comprenant un tel capteur et un procédé de détection de la position du point mort d'une boîte de vitesses d'un véhicule automobile, comprenant un tel capteur.

On connaît des capteurs de position de boîte de vitesses automatiques ou robotisées. Ces capteurs sont prévus dès la conception d'une boîte de vitesses et sont intégrés avec celle-ci, souvent au niveau des actionneurs permettant de faire des changements de vitesses. Pour ces capteurs, des technologies diverses sont appliquées. Par exemple, on connaît des capteurs de positionnement à base d'un potentiomètre pour connaître la position d'un actionneur et pour en déduire la position de la boîte de vitesses, c'est-à-dire si et quel rapport de vitesses est engagé.

D'autres technologies, comme des technologies magnétiques à effet Hall ou inductives trouvent aussi depuis peu leur application dans le cadre des capteurs de position pour des boites de vitesses automatiques ou robotisées. A titre d'exemple, on cite le document WO 2005 / 064281 qui décrit un capteur de position intégré qui détecte par effet Hall la position d'un axe de transmission de la boîte de vitesses spécifiquement encodé par aimants dans plusieurs régions. Toutefois, ce capteur est complexe et très onéreux.

Récemment, dans le domaine automobile, sont apparus des systèmes appelés « STOP&START » pour les véhicules équipés d'une boîte de vitesses robotisée ou automatisée. Il s'agit de systèmes qui gèrent l'arrêt du moteur lorsque le véhicule s'arrête pendant une durée prédéfinie, par exemple devant un feu rouge, et qui démarrent automatiquement le moteur lorsque le conducteur appuie à nouveau sur la pédale d'accélérateur.

Ce système permet d'économiser, en particulier en ville, une quantité importante de carburant et rencontre pour cette raison un succès important.

Il faut savoir que pour des raisons de sécurité, il est indispensable de connaître la position de la boîte de vitesses à l'arrêt, avant de démarrer le moteur à nouveau.

En effet, il faut que la boite de vitesses soit dans sa position de point mort, c'est-à-dire sans rapport de vitesse engagé afin d'éviter une propulsion vers l'avant du véhicule lors du démarrage, ce qui pourrait facilement causer un accident.

Pour détecter si aucune vitesse n'est engagée, on prévoit qu'un capteur de position de la boîte de vitesse émette un signal de sortie représentatif de la position du point mort.

Il est alors indispensable de s'assurer que ce capteur de position est en fonctionnement normal, c'est-à-dire qu'il n'est pas défaillant et que le signal émis indique avec certitude la position du point mort.

On connaît déjà , par example du document FR 2 818 725, selon les caractéristiques du préambule de la revendication 1, des dispositifs améliorant la sécurité de la mesure du capteur de position. Ces dispositifs évitent une mauvaise interprétation du signal émis dans le cas d'un court-circuit entre le signal de sortie et la masse ou en cas de circuit ouvert sur l'alimentation du capteur.

Pour cela, ces dispositifs prévoient que le capteur comporte un circuit de résistances permettant de fournir une tension de sortie qui soit ni nulle, ni égale à la valeur de l'alimentation du capteur. Le signal de sortie possède alors une valeur intermédiaire, distincte d'un niveau bas de court-circuit et distincte d'un niveau haut de circuit ouvert.

Toutefois, ces dispositifs ne permettent pas d'identifier tous les défauts susceptibles d'intervenir sur le circuit électrique du capteur.

Notamment, ces dispositifs ne permettent pas l'identification d'une impédance intempestive présente sur un câble du circuit électrique ou sur un connecteur. Cette impédance peut apparaître par exemple lorsqu'une résistance anormale apparaît au niveau des connecteurs (résistance de contact) ou au niveau du câble de l'alimentation. Le signal de sortie possède alors une valeur analogique intermédiaire erronée, ne correspondant pas à la véritable position des vitesses.

Pour résoudre ces problèmes, la présente invention vise à proposer un capteur de position d'une boîte de vitesses pour lequel il est possible de vérifier l'intégrité du signal de sortie émis à chaque instant, quelque soit le type de défaut susceptible de se produire.

A cet effet, l'invention a pour objet un capteur de position d'une boîte de vitesse d'un véhicule automobile comprenant une sonde apte à coopérer avec une cible mobile liée à un élément d'actionnement des rapports d'une boîte de vitesses pour fournir au moins un signal analogique représentatif de la position du point mort de la boite de vitesses, le capteur de position comportant en outre une unité de traitement du signal comportant un convertisseur analogique numérique, caractérisé en ce que ladite unité de traitement est configuré pour convertir le signal analogique en signal de sortie numérique pour fournir une information périodique prédéfinie correspondant à la position du point mort uniquement lorsque d'une part, la cible est dans la position du point mort et d'autre part, lorsque le capteur est en état de fonctionnement normal.

L'invention a aussi pour objet une boîte de vitesses comprenant un capteur de position tel que précédemment défini.

L'invention prévoit également un procédé de détection de la position du point mort d'une boîte de vitesse d'un véhicule automobile, comprenant un capteur de position tel que précédemment défini, caractérisé en ce qu'on convertit le signal analogique en signal de sortie numérique pour fournir une information périodique prédéfinie correspondant à la position du point mort uniquement lorsque d'une part, la cible est dans la position du point mort et d'autre part, lorsque le capteur fonctionne normalement.

D'autres avantages et caractéristiques apparaîtront à la lecture de la description de l'invention, ainsi que des dessins annexés sur lesquels :
- la figure 1 est une vue schématique d'un capteur de position selon l'invention,
- les figures 2, 3 et 4 sont des courbes représentant le signal de sortie du capteur de la figure 1.

Sur ces figures, les éléments identiques portent les mêmes numéros de référence.

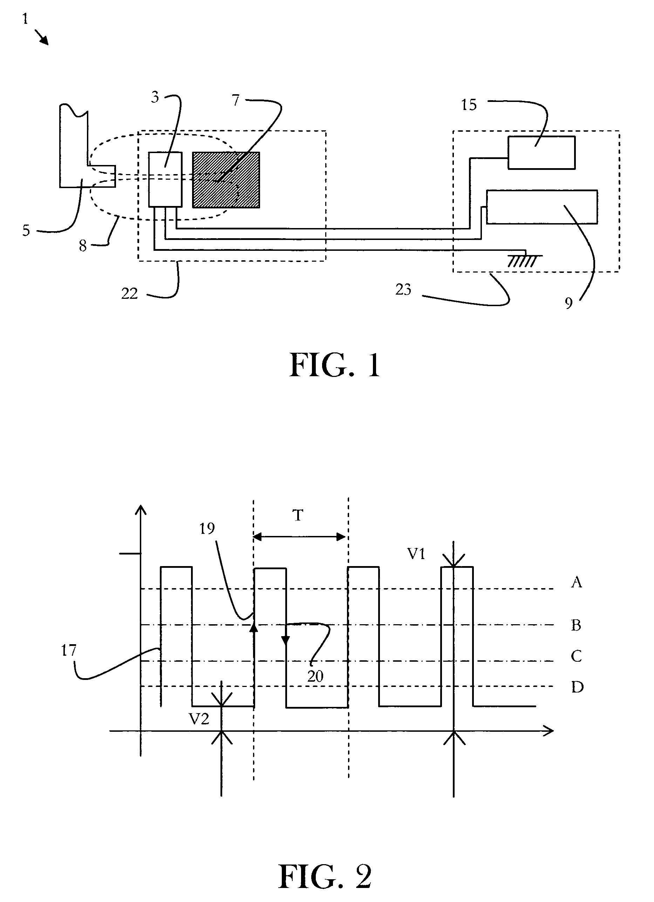

La figure 1 montre une vue schématique d'un capteur de position 1 selon l'invention, apte à être monté sur un carter de boîte de vitesses manuelle ou automatique de véhicule automobile, non représentée.

La boite de vitesses comprend un élément d'actionnement des divers rapports de vitesses en fonction des commandes appliquées par un levier de vitesses via une tringlerie (voir par exemple la boite de vitesses décrite dans EP 0 273 874).

L'élément d'actionnement peut être par exemple, une tige d'actionnement, un crabot ou une came de la boîte de vitesses.

Le capteur de position 1 comporte une sonde 3, apte à coopérer avec une cible 5.

La cible 5 est liée à l'élément d'actionnement des rapports de la boite de vitesses pour être mobile avec lui et être représentative d'une vitesse engagée ou du point mort.

Ainsi, en fonctionnement, la sonde 3 et la cible 5 coopèrent pour fournir au moins un signal analogique représentatif de la position du point mort ou de la vitesse engagée de la boite de vitesses.

La sonde 3 est par exemple, à effet magnétique, optique ou inductif.

On préférera une sonde 3 à effet Hall, apte à mesurer un champ magnétique pour déterminer la position de la cible 5 dans l'espace et pour en déduire la position de point mort ou d'une vitesse engagée de la boîte de vitesses.

La sonde 3 à effet Hall comprend avantageusement des cellules Hall implantées sur un circuit intégré et un concentrateur de flux pour mesurer le champ magnétique (voir à titre d'exemple les documents US6545462 et US7038448).

La cible 5 est prévue aimantée, c'est-à-dire possédant une perméabilité non nulle.

Dans le cas d'une cible 5 métallique, on dispose un aimant 7 à proximité de la sonde 3 à effet Hall, de sorte que la sonde 3 soit traversée par les lignes de champ magnétiques 8 formées entre l'aimant 7 et la cible 5, comme visible sur la figure 1.

Ainsi, en fonctionnement, lorsque la cible 5 est sensiblement face à la sonde 3, celle-ci mesure la variation du champ magnétique et détecte la position du point mort ou du rapport de vitesses.

Dans le cas où le capteur 1 comporte une sonde 3 à effet optique, la cible 5 est prévue pour coopérer optiquement avec la sonde 3.

La sonde 3 optique peut ainsi détecter une variation du signal optique lorsqu'elle est sensiblement face à la cible 5.

Le signal analogique est par exemple, un courant ou une tension.

Selon l'invention, le capteur 1 comporte en outre une unité de traitement du signal 9 comportant un convertisseur analogique numérique apte à convertir le signal analogique en signal de sortie numérique 17 pour fournir une information périodique prédéfinie correspondant à la position du point mort uniquement lorsque d'une part, la cible 5 est dans la position du point mort et d'autre part, lorsque le capteur 1 est en état de fonctionnement normal.

On obtient ainsi un signal de sortie numérique 17 correspondant à la position de point mort ou d'une vitesse engagée, sensiblement en forme de créneau comportant une amplitude haute V1, une amplitude basse V2 et au moins deux transitions successives 19 et 20 dans une période de temps T, comme représenté sur la figure 2.

Par exemple, la première transition 19 est positive, c'est-à-dire que l'amplitude du signal passe d'une valeur V1 à une valeur inférieure V2, avec une pente de préférence nulle, et la seconde transition 20 est négative entre V2 et V1.

Une pente nulle permet d'éviter une position indéterminée du rapport de vitesses de la boite de vitesses.

Dans ce dernier cas de figure, on peut également prévoir que l'unité de traitement 9 attribue arbitrairement aux valeurs transitoires du signal numérique 17, une valeur soit égale à l'amplitude V1, soit à l'amplitude inférieure V2.

Ainsi, pour vérifier l'intégrité du signal de sortie 1 7 du capteur 1, il suffit de vérifier la présence de deux transitions successives 19, 20 dans le signal numérique 17.

Si, après une première transition 19 du signal 17, et dans la période T du signal numérique 17, aucune seconde transition 20 du signal 17 est détectée, alors le capteur 1 est défaillant.

En revanche, la détection d'une deuxième transition 20 informe d'une part, qu'une vitesse est ou non engagée et d'autre part, que l'information est parfaitement fiable.

Ainsi, on obtient un capteur de position 1 dont la habilité est améliorée par rapport aux capteurs classiques de codage analogique de l'information de sortie, comme par exemple, avec un codage à différents niveaux de tension.

Pour cela, le capteur de position 1 possède avantageusement un bus numérique (non représenté) tel que LIN Local Interconnect Network ou CAN Controller Area Network, en sortie de l'unité de traitement 9 permettant transmission du signal de sortie numérique 17.

Alternativement, le convertisseur analogique numérique est un convertisseur à modulation de largeur d'impulsion («Pulse Width Modulation» ou « PWM » en anglais).

On peut ainsi avantageusement coder différemment un premier signal numérique de sortie 17 correspondant à la position de point mort et un deuxième signal numérique de sortie 17 correspondant à la position d'une vitesse engagée.

Par exemple, le premier signal numérique de sortie 17 comporte une amplitude haute V1 sur une durée de l'ordre de quatre-vingt pourcent de la période T et une amplitude basse V2 sur le reste de la période T.

Le second signal numérique peut, à l'inverse, comporter une amplitude haute V1 sur seulement vingt pourcent de la période T et une amplitude basse V2 sur le reste de la période T.

L'ensemble 22 comportant la sonde 3, et éventuellement l'aimant 7, peut être déporté de l'ensemble 23 comportant l'unité de traitement 9 et l'alimentation générale 15 du capteur 1 (figure 1).

L'unité de traitement 9 est en outre apte à coder au moins une information périodique supplémentaire dans le signal de sortie numérique 17.

Ainsi, le capteur 1 peut émettre simultanément d'une part un signal de position d'une vitesse, tel que la position du point mort et d'autre part, un signal de diagnostic correspondant à son état de fonctionnement.

Avantageusement, l'unité de traitement 9 comporte en outre un moyen de diagnostic apte à comparer l'amplitude du signal de sortie numérique 17 à un seuil prédéfini.

Par exemple, l'unité de traitement 9 mesure les amplitudes hautes V1 et basses V2, du signal de sortie numérique 17 et les compare à des valeurs prédéfinies, pour déceler la présence d'une résistance intempestive de contact ou présente sur un câble du circuit électrique du capteur 1.

L'unité de traitement 9 peut ainsi comporter plusieurs niveaux de seuil de fonctionnement.

Selon un exemple de réalisation, quatre seuils A, B, C et D sont prédéfinis et mémorisés dans l'unité de traitement 9.

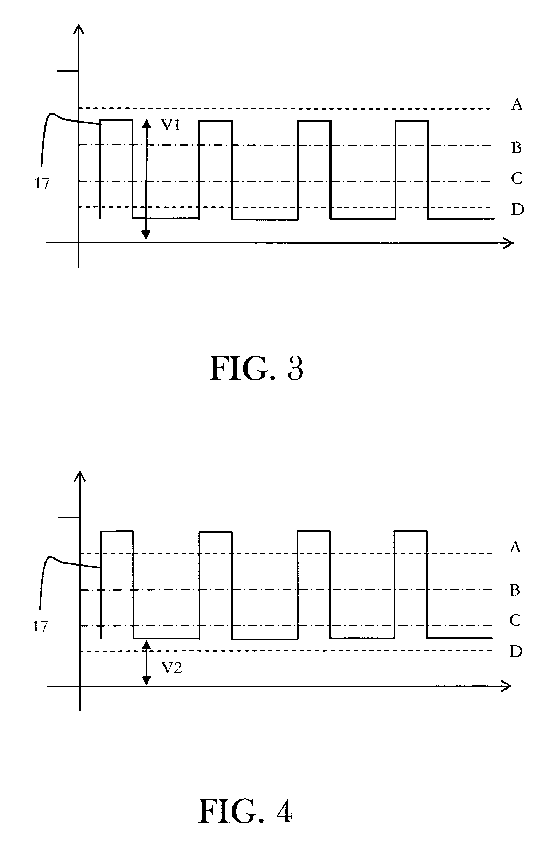

Les figures 3 et 4 illustrent deux cas de figures dans lesquels le capteur 1 fonctionne normalement, c'est-à-dire qu'il n'est pas défaillant et que le signal émis indique avec certitude la position de la vitesse engagée ou du point mort mais dans lesquels un défaut pourrait apparaître.

Ainsi, l'amplitude haute V1 du signal de sortie 17 doit être supérieure au premier seuil A et l'amplitude basse V2 doit être inférieure au quatrième seuil D pour un fonctionnement normal sans défaut du capteur 1 (figure 2).

Lorsque l'amplitude V1 du signal 17 est inférieure au seuil A mais supérieure au deuxième seuil B ou lorsque l'amplitude V2 est supérieure au seuil D mais inférieure au troisième seuil C, alors le capteur 1 fonctionne normalement mais une maintenance peut s'avérer nécessaire.

Sur la figure 3, l'amplitude V1 du signal 17 est inférieure au seuil A, ce qui signifie que l'information de la position d'une vitesse engagée ou du point mort est toujours correcte mais que le capteur 1 nécessite une maintenance.

Sur la figure 4, l'amplitude V2 du signal 17 est supérieure au seuil D, ce qui signifie que l'information de la position d'un vitesse ou du point mort est toujours correcte mais que le capteur 1 nécessite une maintenance.

On peut également prévoir que lorsque l'amplitude haute V1 du signal 17 est inférieure au seuil B, ou lorsque l'amplitude basse V2 est supérieure au seuil C, alors l'unité de traitement 9 stoppe la transmission de l'information périodique.

Pour cela, on prévoit que l'unité de traitement 9 est apte à stopper la transmission de l'information périodique selon le résultat de la comparaison du moyen de diagnostic en coupant par exemple, l'alimentation de la sonde 3 au niveau de l'alimentation générale 15 du capteur 1.

Ainsi, le capteur 1 n'émet plus de signal de sortie 17 dès que les amplitudes V1 et V2 sont situées hors des seuils B et C prédéfinis, ce qui permet d'assurer la précision des informations transmises.

Lorsque cette information supplémentaire est codée dans le signal de sortie numérique 17, l'utilisateur en est informé et peut prévoir de mettre en place une maintenance.

Ainsi, le signal de sortie 17 comporte l'information correspondant à la position d'une vitesse ou du point mort et l'information supplémentaire informant de la nécessité à plus ou moins long tenue de réaliser une maintenance du capteur 1.

On comprend donc qu'un tel capteur de position 1 comportant en outre une unité de traitement du signal 9 comportant un convertisseur analogique numérique apte à fournir une information périodique prédéfinie correspondant à la position du point mort uniquement lorsque d'une part, la cible 5 est dans la position du point mort et d'autre part, lorsque le capteur 1 est en état de fonctionnement normal, permet de disposer d'un capteur 1 sécuritaire, fiable, robuste et à faible coût de revient et ayant un niveau de diagnostic beaucoup plus sûr que d'autre solutions, telles qu'électromécaniques pour lesquelles le contact électrique est susceptible de s'interrompre inopinément en cas de vibration ou de corrosion des contacts.

## Revendications

1. Capteur de position d'une boîte de vitesse d'un véhicule automobile comprenant une sonde (3) apte à coopérer avec une cible (5) mobile liée à un élément d'actionnement des rapports d'une boîte de vitesses pour fournir au moins un signal analogique représentatif de la position du point mort de la boîte de vitesses, le capteur de position comportant en outre une unité de traitement du signal (9) comportant un convertisseur analogique numérique, **caractérisé en ce que** ladite unité de traitement est configurée pour convertir le signal analogique en signal de sortie numérique (17) pour fournir une information périodique prédéfinie correspondant à la position du point mort uniquement lorsque d'une part, la cible (5) est dans la position du point mort et d'autre part, lorsque le capteur (1) est en état de fonctionnement normal.

2. Capteur de position selon la revendication 1, **caractérisé en ce que** l'unité de traitement (9) est en outre configurée pour coder au moins une information périodique supplémentaire dans le signal de sortie numérique (17).

3. Capteur de position selon l'une quelconque des revendications 1 ou 2, **caractérisé en ce que** l'unité de traitement (9) comporte en outre un moyen de diagnostic configuré pour comparer l'amplitude du signal de sortie numérique (17) à un seuil prédéfini (A, B, C, D).

4. Capteur de position selon la revendication 3, **caractérisé en ce que** l'unité de traitement (9) est configurée pour stopper la transmission de l'information périodique selon le résultat de la comparaison du moyen de diagnostic.

5. Capteur de position selon l'une quelconque des revendications précédentes, **caractérisé en ce qu'**il comporte un bus numérique tel que LIN ou CAN, en sortie de l'unité de traitement (9) permettant la transmission du signal de sortie numérique (17).

6. Capteur de position selon l'une quelconque des revendications 1 à 4, **caractérisé en ce que** le convertisseur analogique numérique est un convertisseur à modulation de largeur d'impulsion (PWM).

7. Capteur de position selon l'une quelconque des revendications précédentes, **caractérisé en ce que** le signal analogique est un courant ou une tension.

8. Capteur de position selon l'une quelconque des revendications précédentes, **caractérisé en ce que** la sonde (3) est une sonde à effet magnétique, optique ou inductif.

9. Capteur de position selon la revendication précédente, **caractérisé en ce que** la sonde est une sonde à effet Hall.

10. Boîte de vitesses comprenant un capteur de position (1) selon l'une quelconque des revendications précédentes.

11. Procédé de détection de la position du point mort d'une boîte de vitesse d'un véhicule automobile, comprenant un capteur de position (1) selon l'une quelconque des revendications 1 à 9, **caractérisé en ce qu'**on convertit le signal analogique en signal de sortie numérique (17) pour fournir une information périodique prédéfinie correspondant à la position du point mort uniquement lorsque d'une part, la cible (5) est dans la position du point mort et d'autre part, lorsque le capteur (1) fonctionne normalement.

12. Procédé de détection selon la revendication 11, **caractérisé en ce qu'**on code au moins une information périodique supplémentaire dans le signal de sortie numérique (17).

## Claims

1. Motor vehicle gearbox position sensor comprising a probe (3) capable of interacting with a mobile target (5) connected to an element for actuating the ratios of a gearbox in order to supply at least one analog signal representative of the neutral position of the gearbox, the position sensor also comprising a signal processing unit (9) comprising an analog-digital converter, **characterized in that** said processing unit is configured to convert the analog signal into a digital output signal (17) in order to provide a predefined periodic item of information corresponding to the neutral position only when, on the one hand, the target (5) is in the neutral position and, on the other hand, when the sensor (1) is in a normal operating state.

2. Position sensor according to Claim 1, **characterized in that** the processing unit (9) is also configured to encode at least one additional periodic item of information in the digital output signal (17).

3. Position sensor according to either one of Claims 1 or 2, **characterized in that** the processing unit (9) also comprises a diagnostic means configured to compare the amplitude of the digital output signal (17) with a predefined threshold (A, B, C, D) .

4. Position sensor according to Claim 3, **characterized in that** the processing unit (9) is configured to stop the transmission of the periodic item of information according to the result of the comparison of the diagnostic means.

5. Position sensor according to any one of the preceding claims, **characterized in that** it comprises a digital bus such as LIN or CAN, at the output of the processing unit (9), allowing the transmission of the digital output signal (17).

6. Position sensor according to any one of Claims 1 to 4, **characterized in that** the analog-digital converter is a pulse-width modulation (PWM) converter.

7. Position sensor according to any one of the preceding claims, **characterized in that** the analog signal is a current or a voltage.

8. Position sensor according to any one of the preceding claims, **characterized in that** the probe (3) is a magnetic-effect, optical-effect or inductive-effect probe.

9. Position sensor according to the preceding claim, **characterized in that** the probe is a Hall effect probe.

10. Gearbox comprising a position sensor (1) according to any one of the preceding claims.

11. Method for detecting the neutral position of a motor vehicle gearbox, comprising a position sensor (1) according to any one of Claims 1 to 9, **characterized in that** the analog signal is converted into a digital output signal (17) in order to provide a predefined periodic item of information corresponding to the neutral position only when, on the one hand, the target (5) is in the neutral position and, on the other hand, when the sensor (1) is operating normally.

12. Detection method according to Claim 11, **characterized in that** at least one additional periodic item of information is encoded in the digital output signal (17).

## Patentansprüche

1. Positionssensor eines Getriebes eines Kraftfahrzeugs, der eine Sonde (3) enthält, die mit einem beweglichen Ziel (5) zusammenwirken kann, das mit einem Betätigungselement der Gänge eines Getriebes zusammenwirken kann, um mindestens ein analoges Signal zu liefern, das für die Position des Totpunkts des Getriebes repräsentativ ist, wobei der Positionssensor außerdem eine Verarbeitungseinheit des Signals (9) aufweist, die einen Analog-Digital-Wandler aufweist, **dadurch gekennzeichnet, dass** die Verarbeitungseinheit konfiguriert ist, um das analoge Signal in ein digitales Ausgangssignal (17) umzuwandeln, um eine der Position des Totpunkts entsprechende vordefinierte periodische Information nur dann zu liefern, wenn einerseits das Ziel (5) in der Position des Totpunkts ist, und wenn andererseits der Sensor (1) im normalen Betriebszustand ist.

2. Positionssensor nach Anspruch 1, **dadurch gekennzeichnet, dass** die Verarbeitungseinheit (9) außerdem konfiguriert ist, um mindestens eine zusätzliche periodische Information im digitalen Ausgangssignal (17) zu codieren.

3. Positionssensor nach einem der Ansprüche 1 oder 2, **dadurch gekennzeichnet, dass** die Verarbeitungseinheit (9) außerdem eine Diagnoseeinrichtung aufweist, die konfiguriert ist, um die Amplitude des digitalen Ausgangssignals (17) mit einer vordefinierten Schwelle (A, B, C, D) zu vergleichen.

4. Positionssensor nach Anspruch 3, **dadurch gekennzeichnet, dass** die Verarbeitungseinheit (9) konfiguriert ist, um die Übertragung der periodischen Information je nach dem Ergebnis des Vergleichs der Diagnoseeinrichtung zu stoppen.

5. Positionssensor nach einem der vorhergehenden Ansprüche, **dadurch gekennzeichnet, dass** er einen digitalen Bus wie LIN oder CAN am Ausgang der Verarbeitungseinheit (9) aufweist, der die Übertragung des digitalen Ausgangssignals (17) erlaubt.

6. Positionssensor nach einem der Ansprüche 1 bis 4, **dadurch gekennzeichnet, dass** der Analog-Digital-Wandler ein Wandler mit Impulsbreitenmodulation (PWM) ist.

7. Positionssensor nach einem der vorhergehenden Ansprüche, **dadurch gekennzeichnet, dass** das analoge Signal ein Strom oder eine Spannung ist.

8. Positionssensor nach einem der vorhergehenden Ansprüche, **dadurch gekennzeichnet, dass** die Sonde (3) eine Sonde mit magnetischer, optischer oder induktiver Wirkung ist.

9. Positionssensor nach dem vorhergehenden Anspruch, **dadurch gekennzeichnet, dass** die Sonde eine HallSonde ist.

10. Getriebe, das einen Positionssensor (1) nach einem der vorhergehenden Ansprüche aufweist.

11. Verfahren zur Erfassung der Position des Totpunkts eines Getriebes eines Kraftfahrzeugs, das einen Positionssensor (1) nach einem der Ansprüche 1 bis 9 enthält, **dadurch gekennzeichnet, dass** das analoge Signal in ein digitales Ausgangssignal (17) umgewandelt wird, um eine der Position des Totpunkts entsprechende vordefinierte periodische Information nur dann zu liefern, wenn einerseits das Ziel (5) in der Position des Totpunkts ist, und wenn andererseits der Sensor (1) normal arbeitet.

12. Erfassungsverfahren nach Anspruch 11, **dadurch gekennzeichnet, dass** mindestens eine zusätzliche periodische Information im digitalen Ausgangssignal (17) codiert wird.
